**Europäisches Patentamt**

**European Patent Office**

**Office européen des brevets**

(11) Veröffentlichungsnummer: **0 027 528**
**B1**

(12) ## EUROPÄISCHE PATENTSCHRIFT

(45) Veröffentlichungstag der Patentschrift:
27.07.83

(51) Int. Cl.³: **B 61 C 15/10**, B 60 B 39/04

(21) Anmeldenummer: **80105262.2**

(22) Anmeldetag: **04.09.80**

(54) **Sandungsvorrichtung für Fahrzeuge.**

(30) Priorität: **23.10.79 DE 2942809**

(43) Veröffentlichungstag der Anmeldung:
**29.04.81 Patentblatt 81/17**

(45) Bekanntmachung des Hinweises auf die Patenterteilung:
**27.07.83 Patentblatt 83/30**

(84) Benannte Vertragsstaaten:
**CH DE FR GB LI SE**

(56) Entgegenhaltungen:
**GB-A-923**
**US-A-2 148 745**
**US-A-2 155 214**
**US-A-2 797 946**
**REVUE GENERALE DES CHEMINS DE FER,**
**Januar 1973, Seite 48, rechte Spalte, Zeilen 4—32;**
**Fig. 2.**

(73) Patentinhaber: **Knorr-Bremse GmbH, Moosacher Strasse 80, D-8000 München 40 (DE)**

(72) Erfinder: **Hefter, Erik, Dr., Richardt-Strauss-Strasse 2a, D-8031 Eichenau (DE)**

## Sandungsvorrichtung für Fahrzeuge

Die Erfindung betrifft eine Vorrichtung zur Abgabe von Sand auf die Fahrbahn vor den Rädern eines Fahrzeuges über Sandaustragskörper, die am Ende eines Sandaustragrohres angeordnet liegen, wobei der in Fahrtrichtung länglich ausgebildete Sandaustragskörper außenseitig mit einem konischen Strömungsprofil versehen ist, dessen vorderes in Fahrtrichtung weisendes Ende abgerundet ist und das außenseitig zwei beidseitig einer mittleren Profilebene durch den Sandaustragskörper liegende aerodynamische wirksame Strömungsflächen zur Beeinflussung der Flugbahn des aus der Austrittsöffnung des Sandaustragskörpers austretenden Sandes aufweist, wobei das hintere, austrittsseitige Ende des Sandaustragskörpers gegenüber der Lauffläche eines Rades Strömungsabreißkanten aufweist.

Mit der US-A-2 148 745 ist eine Sandungsvorrichtung der vorstehend genannten Art für Schienenfahrzeuge bekanntgeworden, bei welcher der Sandaustragskörper eine einer liegenden Pyramide entsprechende Gestalt aufweist, wobei die Pyramidenspitze in Fahrtrichtung weist. Das Sandaustragsrohr ist schräg von vorne-oben durch die Oberfläche des Sandaustragskörpers in diesen hineingeführt und endet in dessen Innerem vor dessen offenem, der Lauffläche eines Rades zugewandtem Ende. Die beiden Seitenflächen des Sandaustragskörpers bilden somit beidseitig einer mittleren Profilebene angeordnete, aerodynamische wirksame Strömungsflächen. Das rückwärtige Ende des Sandaustragskörpers verläuft schräg nach untenrückwärts etwa dem Einlaufkeil des Rades angepaßt, wobei jedoch der Spalt zwischen diesem Ende und der Radlauffläche sich in Annäherungsrichtung an die Fahrbahnoberfläche erweiternd ausgebildet ist. Der bekannte Sandaustragskörper ist aus einem leicht verformbaren Material, insbesondere einem Drahtgewebe gefertigt, so daß er bei einem Abfallen vom Sandaustragsrohr leicht vom ihn dann überrollenden Fahrzeugrad zusammengepreßt werden kann. Der bekannte Sandaustragskörper soll bewirken, daß der Fahrtwind und die sich in Radnähe befindenden, turbulenten Luftströmungen vom aus der Mündung des Sandaustragsrohres austretenden und auf die Fahrbahnoberfläche fallenden Sand ferngehalten werden, so daß der Sand ungestört auf die Fahrbahnoberfläche fallen kann und auf dieser bis zum Überrollen durch das Rad verbleibt; der Sandaustragskörper soll also vermeiden, daß ein beachtlicher Anteil des Sandes durch Luftströmungen verweht und von der Fahrbahnoberfläche weggeblasen wird und somit nutzlos verlorengeht.

Mit der US-A-2 155 214 und der GB-A-923 AD1913 sind Sandungsvorrichtungen bekanntgeworden, bei welchen die unteren Enden der Sandungsaustragsrohre mit wenigstens während Sandungsvorgängen zumindest nahezu auf die Fahrbahnoberfläche aufsetzbaren und bis dicht vor die Radaufstandsstelle reichenden Sandleitkörpern versehen sind. Die Sandleitkörper sollen einen nach vorne und seitlich im wesentlichen abgeschlossenen, kanalartigen Raum auf der Fahrbahnoberfläche bilden, welcher ungestört von Luftströmungen mit Sand füllbar ist, so daß sich ohne nennenswerten Sandverlust eine gut ausgeformte Sandspur auf der Fahrbahnoberfläche bilden soll.

Die US-A-2 797 946 zeigt ein schräg nach unten in den Einlaufkeil eines Rades verlaufendes, an seinem Ende sich etwas erweiterndes Sandaustragsrohr für eine druckluftbetätigte Sandungseinrichtung, wobei das Sandaustragsrohr in einem Endabschnitt durch eine in seiner Längsrichtung verlaufende Leitwand in zwei Längskanäle unterteilt ist. Das untere Ende der Leitwand verläuft in Richtung zum Rad waagerecht abgewinkelt. Durch diese Ausbildung des Sandaustragsrohres soll erreicht werden, daß sich im einen rückwärtigen Längskanal im wesentlichen eine wenig Sand führende Druckluftströmung ergibt, die am Austritt in eine im wesentlichen waagerecht zum Rad hin verlaufende Strömung umgelenkt wird, während im anderen, vorderen Längskanal im wesentlichen Sand mit nur einem geringen Druckluftanteil geführt wird, der ungestört aus dem unteren Längskanal-Ende auf die Fahrbahnoberfläche herabfallen soll.

Aus der REVUE GENERALE DES CHEMINS DE FER, Januar 1973, Seite 48, ist schließlich eine Sandungsvorrichtung bekannt, bei welcher das Sandaustragsrohr mittels einer Kautschukverlängerung bis auf wenige Millimeter Abstand zur Radlauffläche in den Einlaufkeil des Rades hineingeführt ist.

Die bisherigen Erfahrungen lehren, daß es insbesondere bei hohen Fahrgeschwindigkeiten nicht möglich ist, den Sand durch Rohre, Leitkörper und ähnliche Vorrichtungen so ausreichend nahe an die Radlaufstandsstelle formschlüssig heranzuführen, daß er nicht doch noch großenteils von Luftströmungen vor dem Überrollen nutzlos verweht wird. Elastisch an die Fahrbahnoberfläche und/oder die Radlauffläche andrückbare Sandleitvorrichtungen weisen bei hohen Fahrgeschwindigkeiten unter dem unvermeidbaren, abschmirgelndem Sandeinfluß hohen Verschleiß auf, so daß sie häufig ersetzt werden müssen. Außerdem ist bei diesen Vorrichtungen ein Ausgleich der Fahrzeugfederungsbewegungen noch weitgehend ungelöst. Der Ausgleich der Fahrzeugfederungsbewegungen ist auch bei Sandungsvorrichtungen nicht befriedigend gelöst, welche den Sand bis auf nur sehr geringe Abstände an die Fahrbahnoberfläche bzw. die Radlauffläche heranführen: Der Ausgleich könnte nur durch die ungefederten Fahrzeugmassen vergrößernde Gestänge erfolgen und die ständigen, stoßartigen Bewegungen würden zu raschem Verschleiß führen. Schließlich hat es sich stets gezeigt, daß es bei vertretbarem Aufwand unmöglich ist, die Luftströmungen zwischen der Mündung des Sandaustragsrohres und der Radaufstandsstelle so zu beruhigen, daß sie den Sand mit nur mäßigen Verlusten auf die Fahrbahnoberfläche gelangen und auf dieser liegenbleiben ließen.

Es sind Vorrichtungen der eingangs genannten Art in den verschiedensten Ausführungen seit langem bekannt. Hierbei wird Sand in den Spalt zwischen der Lauffläche eines Rades und der Fahrbahn abgegeben. Es stellte sich jedoch heraus, daß der ausgetragene Sand vor allem bei höheren Fahrgeschwindigkeiten zu einem beträchtlichen Anteil nicht auf der Fahrbahn vor der Lauffläche des Rades zu liegen kommt, weil er während des freien Fluges vom Fahrtwind seitlich abgetrieben wird.

Aufgabe der Erfindung ist es daher, eine Vorrichtung gemäß den eingangs genannten Merkmalen derart auszubilden, daß mittels einfacher konstruktiver Mittel in weit höherem Maße als bisher sichergestellt werden kann, daß auch bei höheren Fahrgeschwindigkeiten der von der Vorrichtung abgegebene Sand vom Fahrtwind nicht nutzlos verweht wird, sondern zur Reibungssteigerung in die Radlaufstandsstelle gelangt.

Diese Aufgabe wird erfindungsgemäß dadurch gelöst, daß die der Lauffläche gegenüberliegende Seite des konischen Strömungsprofils eine geschlossene Fläche ist, in die die Austrittsöffnung mündet, und daß das konische Strömungsprofil auf der der Schiene gegenüberliegenden Seite eine zum Strömungsprofil symmetrische Bodenfläche aufweist, die die Strömungsflächen seitlich überragt.

Vorteilhafte Aus- und Weiterbildungen der Erfindung können den Merkmalen der abhängigen Ansprüche entnommen werden.

Die Zeichnung zeigt in schematischer Darstellung eine Ausführung eines erfindungsgemäßen Sandaustragskörpers, der an die verschiedensten bekannten Sandungsvorrichtungen angeschlossen werden kann. Hierbei zeigt

Fig. 1 eine Seitenansicht der erfindungsgemäßen Ausführung,

Fig. 2 eine Stirnansicht entgegen der Fahrtrichtung und

Fig. 3 einen Schnitt entlang den Linien III-III in Fig. 1.

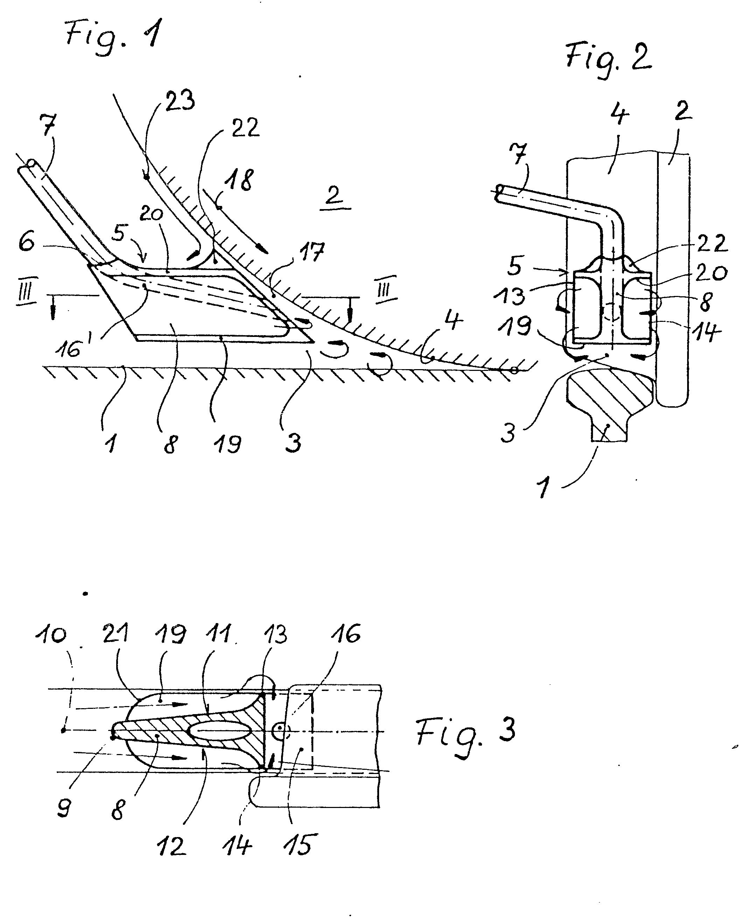

In Fig. 1 ist eine Fahrbahn 1 und ein auf der Fahrbahn 1 sich bewegendes Rad 2 nur schematisch angedeutet. In den Spalt 3 zwischen der Lauffläche 4 des Rades 2 und der Fahrbahn 1 ist erfindungsgemäß der Sandaustragskörper 5 angeordnet, der eine ruderartige langgestreckte Gestalt aufweist und an seinem vorderen oberen Ende 6 an ein Austragsrohr 7 einer nicht dargestellten Sandungsanlage angeschlossen ist.

Der Sandaustragskörper besteht aus einem länglichen, flachen Grundkörper 8, der ein Strömungsprofil aufweist, dessen in Fahrtrichtung weisendes vorderes Ende 9 abgerundet ist, von dem aus beidseitig einer mittleren Profilebene, die auf der Fahrbahn 1 im wesentlichen senkrecht steht, seitliche Strömungsflächen 11 und 12 ausgehen, die ebenfalls im wesentlichen senkrecht zur Fahrbahn verlaufen und die unter stetiger Zunahme ihrer beiderseitigen Abstände an Strömungsabreißkanten 13 und 14 anschließen, welche die rückwärtige Fläche 15 des Austragskörpers 5 gegenüber der Lauffläche 4 des Rades 2 seitlich begrenzen. Die Flächenabschnitte, mit denen die Strömungsflächen 11 und 12 an die Strömungsabreißkanten 13, 14 anschließen, sind gegenüber der Profilmittelebene 10 jeweils nach innen gekrümmt. In der Fläche 15 befindet sich etwa mittig eine Sandaustrittsöffnung 16, die über einen Kanal 16' im Austragskörper an das Austragsrohr 7 anschließt. Die flache rückwärtige Fläche 15 bildet mit der Profilmittelebene 10 einen rechten Winkel. Es ist klar, daß die Fläche 15, abweichend von dem Ausführungsbeispiel nach den Fig. 1 bis 3, auch gegenüber den Strömungsabreißkanten 13 und 14 zurückgesetzt sein kann, d. h., die Abreißkanten ragen über die rückwärtige Fläche 15 etwas hinaus. Es kann dabei vorteilhaft sein, die rückwärtige Fläche 15 nach innen gewölbt auszubilden.

Die rückwärtige Fläche 15 bildet mit der Lauffläche 4 des Rades 2 einen sich in Drehrichtung des Rades 2 erweiternden freien Spalt 17. Die Drehrichtung des Rades 2 ist durch den Pfeil 18 gekennzeichnet.

An dem mit einem Strömungsprofil versehenen Grundkörper 8 des Sandaustragskörpers 5 schließen Deck- und Bodenflächen 19 und 20 an, die einen bestimmten Abstand voneinander aufweisen und die die Strömungsflächen 11 und 12 seitlich überragen und außerdem quer zu ihnen verlaufen, d. h., die Deck- und Bodenflächen verlaufen etwa waagerecht und bilden damit einen rechten Winkel zur mittleren Profilebene 10. Die seitlichen Strömungsflächen 11 und 12 liegen also stegartig zwischen den parallelen Deck- und Bodenflächen 19 und 20, die am vorderen Ende 21 abgerundet an die Strömungsflächen 11 und 12 anschließen und am hinteren Ende des Austrittskörpers 5 an die Strömungsabreißkanten 13 und 14 angrenzen. Die größte Breite der Deck- und Bodenflächen 19 und 20 quer zu den Strömungsflächen 11 und 12 ist nicht größer als der Abstand der Strömungsabreißkanten 13 und 14 voneinander.

Das vordere Ende 9 des Grundkörpers 8 überragt etwas die beiden Deck- und Bodenflächen 19 und 20. Der Austragskörper 5 besitzt von der Seite gesehen eine etwa parallelogrammartige Gestalt, deren eine parallele Seite von den Deck- und Bodenflächen 19 und 20 gebildet werden, während die kürzeren anderen im wesentlichen parallel zueinander verlaufenden Seiten von der rückwärtigen Fläche 15 mit den Strömungsabreißkanten 13 und 14 und der vorderen Stirnfläche am Ende 9 des Grundkörpers 8 gebildet werden. Oberhalb der Deckfläche 20 schließt an die rückwärtige Fläche 15 eine Strömungsleitfläche 22 an, deren der Lauffläche 4 des Rades 2 zugewandte Fläche in der Verlängerung der rückwärtigen Fläche 15 liegt und die in Blickrichtung entgegen der Fahrtrichtung schaufel- oder muschelartig ausgebildet ist, um Fahrtwindströmungen, die von der Lauffläche 4 des Rades 2 mitgerissen werden, möglichst weitgehend abzugreifen bzw. abzuschneiden und über die Deckfläche 20 nach vorne und zur Seite abzuleiten, wie es durch den Pfeil 23 in Fig. 1 angedeutet ist.

Ziel ist es, mit der Strömungsleitfläche 22 die Laufflächenrandströmungen weitgehend abzugreifen, so daß nur relativ geringe Luftanteile in den Spalt 17 zwischen der Lauffläche 4 des Rades und der rückwärtigen Fläche 15 über die Lauffläche des Rades gelangen. Dafür soll der Fahrtwind, der über die seitlichen Strömungsflächen 11 und 12 des Austragskörpers 5 in Richtung auf die Strömungsabreißkanten 13 und 14 strömt, aufgrund aerodynamischer Wirkungen um die Strömungsabreißkanten herum zur Mitte der rückwärtigen Fläche 15 und damit in den Spalt 17 strömen.

Durch das weitgehende Abgreifen der laufflächennahen Strömungen am Rad soll das nach Innenströmen der Fahrtwinde, das durch die Strömungsabreißkanten ausgelöst wird, noch begünstigt werden.

Wird bei fahrendem Fahrzeug gesandet, so tritt der Sand aus der Austrittsöffnung 16 in den Spalt 17 zwischen der Lauffläche 4 und des Rades 2 und der rückwärtigen Fläche 15 ein und unterliegt hier den von den beiden Strömungsabreißkanten 13 und 14 ausgehenden, bezüglich des Austrittskörpers 3 nach innen gerichteten Luftströmungen, die verhindern, daß der Sand vom Fahrtwind seitlich weggeblasen wird und nicht auf die Fahrbahn 1 vor das Rad 2 fällt.

Der Sandaustrittskörper besitzt damit erfindungsgemäß äußere aerodynamisch wirksame Flächen bzw. eine aerodynamisch wirksame äußere Gestalt, derzufolge hinter den Sandaustrittskörper Luftströmungen des Fahrtwindes gelangen, die den am hinteren Ende des Sandaustrittskörpers austretenden Sand in seiner Flugbahn derart beeinflussen, daß er vor dem Rad auf der Fahrbahn zu liegen kommt. Ein seitliches Wegblasen des Sandes vor seinem Auftreffen auf der Fahrbahn durch unkontrollierte Fahrtwindströmungen wird auf die erfindungsgemäße Weise weitgehend vermieden.

Erfindungsgemäß kann also auf sehr einfache Weise durch eine besondere aerodynamisch wirksame Gestaltung des Sandaustrittskörpers der Sand gezielter auf die Fahrbahn vor die Räder geleitet werden. Hierdurch kann wesentlich wirksamer als bisher auch bei relativ hohen Fahrtgeschwindigkeiten gesandet werden. Darüber hinaus kann der Sandverbrauch wesentlich gedrosselt werden, da Fehlaustragsmengen weitgehend vermieden oder gegenüber dem Stand der Technik doch wesentlich verringert werden.

## Patentansprüche

1. Vorrichtung zur Abgabe von Sand auf die Fahrbahn (1) vor den Rädern (2) eines Fahrzeuges über Sandaustragskörper (5), die am Ende eines Sandaustragsrohres (7) angeordnet liegen, wobei der in Fahrtrichtung länglich ausgebildete Sandaustragskörper (5) außenseitig mit einem konischen Strömungsprofil versehen ist, dessen vorderes, in Fahrtrichtung weisendes Ende (9) abgerundet ist und das außenseitig zwei beidseitig einer Profilmittelebene (10) durch den Sandaustragskörper (5) liegende aerodynamisch wirksame Strömungsflächen (11, 12) zur Beeinflussung der Flugbahn des aus der Austrittsöffnung (16) des Sandaustragskörpers (5) austretenden Sandes aufweist, wobei das hintere, austrittsseitige Ende des Sandaustragskörpers (5) gegenüber der Lauffläche (4) eines Rades (2) Strömungsabreißkanten (13, 14) aufweist, dadurch gekennzeichnet, daß die der Lauffläche (4) gegenüberliegende Seite des konischen Strömungsprofils eine geschlossene Fläche ist, in die die Austrittsöffnung (16) mündet, und daß das konische Strömungsprofil auf der der Schiene gegenüberliegenden Seite eine zum Strömungsprofil symmetrische Bodenfläche (19) aufweist, die die Strömungsflächen (11, 12) seitlich überragt.

2. Vorrichtung nach Anspruch 1, dadurch gekennzeichnet, daß die aerodynamisch wirksamen Strömungsflächen (11, 12) mit zur mittleren Profilmittelebene (10) des Austragskörpers (5) jeweils nach innen gekrümmten Flächenabschnitten an die seitlichen Strömungsabreißkanten (13, 14) anschließen.

3. Vorrichtung nach Anspruch 1, dadurch gekennzeichnet, daß die Austrittsöffnung (16) gegenüber den Abreißkanten (13, 14) zurückgesetzt liegt.

4. Vorrichtung nach Anspruch 2, dadurch gekennzeichnet, daß die seitlichen Strömungsflächen (11, 12) an eine die Strömungsflächen seitlich überragende und quer zu den Strömungsflächen (11, 12) liegende Deckfläche (20) des Sandungsaustragskörpers (5) anschließen.

5. Vorrichtung nach Anspruch 3, dadurch gekennzeichnet, daß die Deck- und/oder Bodenfläche (19, 20) an die Strömungsabreißkanten (13, 14) anschließen und diese nicht überragen.

6. Vorrichtung nach Anspruch 2, 3 oder 4, dadurch gekennzeichnet, daß am hinteren, oberen Ende des Sandaustragskörpers (5) eine die von der Lauffläche (4) des Rades (2) mitgerissene Fahrtwindströmung (23) weitgehend abgreifende Strömungsleitfläche (22) vorhanden ist, deren der Lauffläche (4) des Rades (2) zugewandte, rückseitige Fläche Teil der rückseitigen Fläche (15) des Sandaustragskörpers (5) ist.

## Claims

1. Device for the discharge of sand onto the track (1) in front of the wheels (2) of a vehicle by means of sand discharge members (5) which are disposed at the end of a sand discharge pipe (7), whereby the sand discharge member (5) constructed to be elongated in the travel direction, is provided on the outside with a conical flow shape, the front end of which (9) pointing in the direction of travel is rounded and which has, on the outside, two aerodynamically effective flow surfaces (11, 12) lying on both sides of a profiled median plane (10) through the sand discharge member (5) for influencing the trajectory of the sand issuing from the outlet aperture (16) of the sand discharge member (5), whereby the rear outlet-side end of the sand discharge member (5) has flow separation edges (13, 14) opposite the contact surface (4) of a wheel (2), characterised in that the side of the conical flow profile lying opposite the contact surface (4) is a closed surface, into which the outlet aperture (16) opens and that the conical flow profile on the side lying opposite the rail has a bottom surface (19) symmetrical to the flow profile, which surface overlaps the flow surfaces (11, 12) laterally.

2. Device according to claim 1, characterised in that the aerodynamically effective flow surfaces (11, 12) with surface sections curved inwards respectively to the profiled median plane (10) of the discharge member (5) connect with the lateral flow separation edges (13, 14).

3. Device according to claim 1, characterised in that the outlet aperture (16) lies set-back with respect to the separation edges (13, 14).

4. Device according to claim 2, characterised in that the lateral flow surfaces (11, 12) are connected to a top surface (20) overlapping the flow surfaces laterally and lying transversely to the flow surfaces (11, 12).

5. Device according to claim 3, characterised in that the top- and/or bottom surface (19, 20) are connected to the flow separation edges (13, 14) and do not overlap them.

6. Device according to claim 2, 3 or 4, characterised in that at the rear upper end of the sand discharge member (5) there is a flow deflector (22) substantially picking-up the air stream flow (23) carried along by the contact surface (4) of the wheel (2), whose rear surface turned towards the contact surface (4) of the wheel (2) is part of the rear surface (15) of the sand discharge member (5).

**Revendications**

1. Dispositif pour distribuer du sable sur la voie de roulement (1) à l'avant des roues (2) d'un véhicule par l'intermédiaire de corps de déversement (5) qui se situent de manière à être disposés à l'extrémité d'un tube de distribution du sable (7), le corps de déversement (5) qui a une forme allongée dans le sens de la marche étant pourvu, du côté extérieur, d'un profil d'écoulement conique dont l'extrémité antérieure (9), dans le sens de la marche, est arrondi et qui comporte, extérieurement, de part et d'autre d'un plan profilé médian (10), deux surfaces d'écoulement (11, 12) à effet aérodynamique, le long du corps de déversement du sable (5) et servant à exercer une influence sur la trajectoire du sable évacué par l'ouverture de sortie (16) du corps de déversement de sable (5), caractérisé par le fait que le côté du profil d'écoulement conique qui se situe en face de la bande de roulement (4), est une surface fermée dans laquelle débouche l'ouverture de sortie (16) et que le profil d'écoulement conique, du côté situé en face du rail, présente une surface de fond (19) qui est symétrique par rapport au profil d'écoulement et qui déborde latéralement les surfaces d'écoulement (11, 12).

2. Dispositif selon la revendication 1, caractérisé par le fait que les surfaces d'écoulement (11, 12) à effet aérodynamique se raccordent aux bords latéraux (13, 14) de rupture de l'écoulement par des sections de surfaces respectivement recourbées vers l'intérieur et vers le plan de profil médian (10) du corps de déversement.

3. Dispositif selon la revendication 1, caractérisé par le fait que l'ouverture de sortie (16) est en retrait par rapport aux bords de rupture (13, 14).

4. Dispositif selon la revendication 2, caractérisé par le fait que les surfaces d'écoulement latérales (11, 12) se raccordent à une surface de couverture (20) du corps de déversement du sable (5), qui déborde latéralement les surfaces d'écoulement et qui est disposée transversalement aux surfaces d'écoulement (11, 12).

5. Dispositif selon la revendication 3, caractérisé par le fait que la surface de couverture et/ou la surface de fond (19, 20) se raccordent aux bords de rupture de l'écoulement (13, 14) et ne débordent pas ces derniers.

6. Dispositif selon la revendication 2, 3 ou 4, caractérisé par le fait qu'à l'extrémité arrière et supérieure du corps de déversement du sable (5) est prévue une surface de guidage de l'écoulement (22) qui prélève une partie importante du courant d'air de roulement (23) entraîné par la bande de roulement (4) de la roue, et dont la surface postérieure qui est située du côté de la bande de roulement (4) de la roue (2), est une partie de la surface postérieure (15) du corps de déversement du sable (5).

0 027 528

Fig. 1

Fig. 2

Fig. 3

7